# EUROPÄISCHE PATENTSCHRIFT

(11) **EP 4 088 986 B1**
(45) Veröffentlichungstag und Bekanntmachung des Hinweises auf die Patenterteilung: **20.03.2024**
(21) Anmeldenummer: 22171990.9
(22) Anmeldetag: 06.05.2022
(51) Int. Cl.: B62B 7/00, B62B 7/10, B62B 7/14, B62B 9/12, B62B 9/18, B62B 9/28

(54) **KINDERWAGEN**
BABY CARRIAGE
VOITURE D'ENFANT

(30) Priorität: 11.05.2021 DE 102021112286
(43) Veröffentlichungstag der Anmeldung: 16.11.2022
(73) Patentinhaber: Beger, Oliver, 84030 Ergolding (DE)
(72) Erfinder: Beger, Udo, 84034 Landshut (DE)
(74) Vertreter: Pröll, Jürgen

(56) Entgegenhaltungen:
- DE-U1-202016 102 410
- US-A1- 2002 070 531
- US-B2- 8 905 427

## Beschreibung

Es wird ein zusammenklappbarer und in seiner Breite veränderbarer Kinderwagen beschrieben.

### Hintergrund

Herkömmliche Kinderwagen sind in ihrer Breite festgelegt und unveränderlich ausgebildet. Hierbei handelt es sich stets entweder um Einzelwagen für ein Kind oder um Zwillingswagen. Das Gestell der Kinderwagen ist entsprechend breit ausgebildet und weist Aufnahmen für entweder einen Einsatz oder im Falle eines Zwillingswagens für zwei Einsätze auf. Eine Erweiterung eines Einzelwagens in einen Zwillingswagen kann unter Umständen erforderlich sein, bspw. durch hinzukommenden Familiennachwuchs. Umkehrt kann es auch erforderlich sein, aus einem Zwillingswagen einen Einzelwagen zu machen, z.B. wenn ein Kind für den Kinderwagen ausgewachsen ist, das zweite Kind jedoch noch nicht. Eine Anpassung des Kinderwagens ist zumeist nicht möglich. Den beschriebenen, veränderten Umständen kann daher bislang nur durch den Kauf eines Einzel- bzw. Zwillingswagen beigekommen werden. Dies stellt jedoch eine unnötige finanzielle Belastung dar und ist auch im Hinblick auf den dafür aufgebrachten Ressourceneinsatz nicht nachhaltig.

Ebenso ist ein ausschlaggebender Punkt bei der Beschaffung eines Kinderwagens seine Praktikabilität, insbesondere im Hinblick auf die Möglichkeit, ihn platzsparend und einfach zu transportierten bzw. zu verstauen. Ein Kinderwagen sollte, um höchsten Ansprüchen genügen zu können, so viele Vorteile wie möglich in sich vereinen. Das heißt, er sollte u.a. stabil, langlebig, leicht, einfach zu bedienen und im besten Falle je nach Bedarf auch in seiner Breite angepasst werden können.

### Stand der Technik

Aus der WO 2010/047596 A2 ist ein Buggy zum Transportieren von Kindern bekannt, der einen Rahmen mit ersten Befestigungselementen zum lösbaren Befestigen einer ersten Last aufweist. Hierzu weist die erste Last eine erste Haltevorrichtung zur Aufnahme eines Kindes auf. Weiterhin ist der Rahmen mit zweiten Befestigungselementen zum lösbaren Befestigen einer zweiten Last versehen. Die Breite des Rahmens des Buggys ist zwischen einer ersten, relativ kleinen Rahmenbreite und einer zweiten, relativ große Rahmenbreite einstellbar. Die zweiten Befestigungselemente sind derart konfiguriert, dass diese sowohl in der ersten Rahmenbreite als auch in der zweiten Rahmenbreite zum lösbaren Befestigen der zweiten Last neben der ersten Last verwendbar sind. Nachteilig hierbei ist, dass die Breite des Rahmens von dem Buggy nur aufwändig veränderbar ist. Dabei ist der Rahmen mechanisch nicht auf exakt auf zwei Breiten einstellbar, so wie es für die Konfiguration von Einzelwagen und Zwillingswagen erforderlich wäre.

Aus der US 2002/0070531 A1 ist ein Joggingkinderwagen bekannt, der von einer Einzelsitzeinheit zu einer Doppelsitzeinheit erweiterbar ist. Der Joggingkinderwagen weist eine U-förmige Lenkerstangenanordnung mit einem Greifbereich mit einer darin befindlichen Trennfuge zum Öffnen und Auseinanderspreizen der Lenkerstange, einen Lenkerstangeneinsatz, der innerhalb der Trennfuge des Greifbereichs angeordnet ist, um eine breitere Lenkerstangenanordnung zur Aufnahme eines zusätzlichen Sitzes zu schaffen, auf. Weiterhin ist eine Hinterachsanordnung mit einer Achse mit gegenüberliegenden Enden vorhanden, wobei jedes Ende einen großen Luftreifen trägt und die Achse eine Trennfuge zum Öffnen und Auseinanderspreizen der Achse aufweist. Weiterhin ist ein Achseneinsatz vorhanden, der innerhalb der Trennfuge der Achse angeordnet ist, um eine breitere Hinterachsachsanordnung zu schaffen. Außerdem sind entsprechende Mittel zum Verbinden der Lenkerstangenanordnung mit der Hinterachsanordnung vorhanden. Außerdem weist der Joggingkinderwagen eine Vorderradanordnung auf, welche aus einem Vorderradrahmen, einem Gehäuse mit einer vorderen Endhülse, Mitteln zum Verbinden der Lenkerstangenanordnung mit der Vorderradanordnung und Mitteln zum Verbinden der Hinterachsanordnung mit der Vorderradanordnung besteht. Es ist eine Mittelstange mit einem rumpfwärts gelegenen Ende vorgesehen, welche mit dem Lenkerstangeneinsatz verbunden ist, und ein distales Ende, das mit der vorderen Endhülse des Gehäuses verbunden ist, um eine strukturelle Längsunterstützung für den Joggingkinderwagen bereitzustellen, wenn sich der Joggingkinderwagen im Doppelsitzmodus befindet. Schließlich ist ein Verstrebungselement vorhanden, dessen unteres Ende mit dem Achseneinsatz und dessen oberes Ende mit dem Lenkstangeneinsatz reibschlüssig verbunden ist, um eine vertikale Abstützung für den Kinderwagen im Zweisitzmodus bereitzustellen. Auch hier ist nachteilig, dass die Verstellung der Breite mechanisch anspruchsvoll gestaltet ist und nicht ohne Weiteres mit einem Handgriff erfolgen kann. Des Weiteren sind keine festen Breiten vordefiniert, sodass auch Breiten eingestellt werden können, die unvorteilhaft weder einen Einzel- noch einen Zwillingswagen ausbilden.

Aus der WO 2001/024759 A1 ist eine Gehhilfe für Personen mit eingeschränkter Gehfähigkeit bekannt, die ein erstes und ein zweites Seitenteil aufweist. Die beiden Seitenteile sind über an den zwei Seitenteilen angebrachte Querstangen verbunden, wobei die Querstangen relativ zueinander parallel bewegt werden können und so eine Einstellung des Abstands zwischen dem ersten Seitenteil und dem zweiten Seitenteil ermöglicht wird, sodass die Breite der Gehhilfe variierbar ist. Die Gehhilfe weist zusätzlich Räder und Griffstangen auf. Die Querstangen werden unter Verwendung einer durch ein Zahnrad mit einem Handgriffhebel gebildete Einstelleinrichtung gegenseitig bewegt, wobei die Einstelleinrichtung an wenigstens einer Stange an dem zweiten Seitenteil angeordnet ist. Das Zahnrad greift in Zähne ein, die an der Querstange an dem ersten Seitenteil angeordnet sind, und welche mit der Querstange mit dem Zahnrad verbunden ist. Nachteilig bei diesem Stand der Technik ist, dass lediglich eine Mechanik zur Verbreiterung angegeben ist, wobei die technische Lehre nicht ausreicht, um einen Kinder- oder Puppenwagen zu beschreiben, der in seiner Breite variierbar ist, sodass er sowohl als Einzelwagen als auch als Zwillingswagen verwendbar ist.

Die US 8 905 427 B2 beschreibt einen umwandelbaren ein- und mehrsitzigen Kinderwagen, wobei dieser wenigstens ein Fahrgestell umfasst. Das Fahrgestell wiederum umfasst eine Stützeinheit zum Tragen mindestens einer Person, typischerweise eines Kleinkindes, eine mit der Stützeinheit gekoppelte Radanordnung, ein Eingriffselement zum Verbinden des Fahrgestells mit einem anderen derartigen Fahrgestell und ein mit der Stützeinheit gekoppeltes Schwenkelement, das ein Drehen der Stützeinheit in Bezug auf das Fahrgestell ermöglicht. Die Trageinheit kann drehbar neu ausgerichtet werden, um den Transport des Fahrgestells zu ermöglichen, so dass die Trageinheit des Fahrgestells und die andere Trageinheit des anderen Fahrgestells in einem Zugzustand oder alternativ in einem Nebeneinanderzustand ausgerichtet werden können. Nachteilig hierbei ist, dass lediglich Kinderwagen offenbart sind, die miteinander koppelbar sind, sodass aus zwei Kinderwagen eine Art Doppel-Kinderwagen herstellbar ist. Jedoch sind hierfür zwei Kinderwagen erforderlich.

Aus DE 20 2016 102 410 U1 ist ein zusammenklappbares Gestell für einen Kinder- oder Einkaufswagen bekannt, welches ein unteres Gestellelement und ein mittleres Gestellelement aufweist, die über ein gemeinsames Schwenkgelenk und über eine Druckfeder miteinander gekoppelt sind, wobei in einer aufgestellten Gebrauchslage die Druckfeder das untere und mittlere Gestellelement in einem spitzen Winkel *α* gegeneinander abgestützt. Nachteilig hierbei ist, dass das offenbarte Gestell nur zusammenklappbar, jedoch in seiner Breite nicht veränderbar ist.

### Aufgabe

Es ist daher Aufgabe einen Kinderwagen bereitzustellen, welcher die Nachteile des Stands der Technik überwindet, indem er einerseits in seiner Breite veränderbar ausgebildet ist, sodass der Kinderwagen entsprechend seiner Verwendung als Einzel- , Zwillings-, Drillingswagen oder Wagen für mehr als drei Kleinkinder angepasst werden kann, und andererseits zusammenklappbar ist.

### Lösung

Die vorstehende Aufgabe wird erfindungsgemäß mit den Merkmalen des Patentanspruchs 1 gelöst. Bevorzugte Weiterbildungen ergeben sich aus den abhängigen Ansprüchen.

Es wird darauf hingewiesen, dass der Gegenstand des nachfolgend beschriebenen zusammenklappbaren und in seiner Breite veränderbaren Kinderwagens auch auf Puppenwagen anwendbar ist. Aus diesem Grund sind die Begriffe Kinderwagen und Puppenwagen synonym zueinander auszulegen. Das Gleiche gilt ebenfalls, wenn nur allgemein ein Wagen, statt ein Kinderwagen bzw. Puppenwagen genannt ist.

Der hier offenbarte Kerngedanke ist ein zusammenklappbarer und in seiner Breite veränderbarer Kinderwagen, wenigstens eine Bodengruppe mit wenigstens drei an der Bodengruppe angeordneten Rädern und ein zur Bodengruppe schwenkbar gekoppeltes Kinderwagengestell, dass zur Aufnahme wenigstens eines Einsatzes dient, aufweisend, wobei das Kinderwagengestell über mindestens eine Schwenkachse in Richtung der Bodengruppe klappbar ist. Hierdurch kann der Kinderwagen vorteilhafterweise einerseits kompakt und einfach zusammengeklappt werden und andererseits auf unterschiedliche Breiten je nach dem wenigstens einen aufzunehmenden Einsatz angepasst werden.

Weitere vorteilhafte Ausführungsformen des zusammenklappbaren und in seiner Breite veränderbaren Kinderwagens ergeben sich aus den Merkmalen der Unteransprüche sowie aus der nachfolgenden Beschreibung.

So ist in einer weiteren vorteilhaften Ausgestaltung des zusammenklappbaren und in seiner Breite veränderbaren Kinderwagens vorgesehen, dass die Bodengruppe ein starres Chassis aus Hohlprofilen aufweist, und wobei in einem der Hohlprofile eine längenveränderliche Achse mit zwei Rädern an ihren äußeren Enden aufgenommen ist, wodurch die Räder in ihrem Abstand zueinander veränderbar sind. Die Hohlprofile können vorteilhaft Rohre mit kreisförmigem oder ovalem Querschnitt oder eckige Hohlprofile sein. Vorteilhaft spannen die Hohlprofile des Chassis der Bodengruppe eine Ebene auf.

Es ist weiterhin denkbar, dass die Hohlprofile aus Metall, einer Metalllegierung, einem Verbundmaterial, Kunststoff oder eine Kombination hieraus sind. Vorteilhaft sind die Hohlprofile dadurch sowohl leicht als auch stabil, um eine widerstandsfähige und zu gleich leicht zu bewegende Bodengruppe bereitzustellen.

Die längenveränderliche Achse kann eine Hinterradachse des Kinderwagens sein. Das übrige Rad bzw. die übrigen Räder können demgemäß als Vorderrad bzw. Vorderräder ausgebildet sein. Hierbei ist vorteilhaft denkbar, das oder die Vorderräder als im Nachlauf gelagerte Räder vorzusehen.

Weiterhin ist in einer weiteren vorteilhaften Ausgestaltung des zusammenklappbaren und in seiner Breite veränderbaren Kinderwagens vorgesehen, dass das Chassis dreiecksförmig, trapezförmig, rechteckig oder U-förmig ausgebildet ist. Hierdurch wird einerseits eine leichte und zugleich auch stabile Bauform des Chassis und damit der Bodengruppe insgesamt hergestellt. Das Chassis ist vorteilhaft symmetrisch ausgebildet, wobei die Symmetrieachse durch die Mitte des Hohlprofils, in welcher die längenveränderliche Achse aufgenommen ist, verläuft.

Es ist ebenfalls in einer alternativen Ausführungsform denkbar, dass das Chassis T-förmig oder I-förmig ausgebildet ist. In dieser alternativen Ausführungsform ist an den äußeren, freuen Enden des Chassis jeweils ein Rad angeordnet, wobei wenigstens zwei Räder über eine längenveränderliche Achse miteinander verbunden sind und diese Achse von einem der Hohlprofile, die das T-förmige oder I-förmige Chassis ausbilden, aufgenommen ist.

Bei dem erfindungsgemäßen zusammenklappbaren und in seiner Breite veränderbaren Kinderwagen ist vorgesehen, dass das Kinderwagengestell einen ersten, unteren Abschnitt sowie einen zweiten, oberen Abschnitt aufweist, wobei die beiden Abschnitte über eine weitere Schwenkachse gelenkig miteinander verbunden sind. Mit den beiden Abschnitten sind der obere und der untere Abschnitt gemeint. So ist es möglich, die beiden Abschnitte des Kinderwagengestells zueinander zu verschwenken. Vorteilhaft spannen die beiden Abschnitte jeweils eine Ebene auf, die sich in der weiteren Schwenkachse schneiden.

Es ist weiterhin vorteilhaft denkbar, dass die Schwenkachsen parallel zueinander ausgerichtet sind. So kann ein gerades Zusammenklappen des Kinderwagens ermöglicht werden, bei der die aufgespannten Ebenen der beiden Abschnitte des Kinderwagengestells sowie die von der Bodengruppe bzw. des Chassis aufgespannten Ebene im Wesentlichen aufeinanderliegen. Die Anordnung der Ebenen im zusammengeklappten Zustand des Kinderwagens kann sich in der hier genannten Ausführungsform als ein mehrfach gerade gefaltetes Blatt Papier vorgestellt werden - bspw. wie bei einem dreifach gefalteten Flyer im Zickzackfalz.

Bei dem erfindungsgemäßen zusammenklappbaren und in seiner Breite veränderbaren Kinderwagen ist vorgesehen, dass die eine weitere Schwenkachse eine längenveränderliche Querverbindung ist, die dazu geeignet ist, die Breite des Kinderwagens zu verändern. Hierzu kann die längenveränderliche Querverbindung als ein teleskopartig verlängerbares Hohlprofil ausgebildet sein.

Vorteilhaft ist ebenfalls denkbar, einen Scherenmechanismus an der längenveränderlichen Querverbindung vorzusehen, mit welchem die Länge derselben und damit auch die Breite des Kinderwagengestells und schließlich auch damit des gesamten Kinderwagens zu verstellen. Hierzu kann der Scherenmechanismus einerseits geöffnet oder geschlossen werden, was wiederum eine Längenveränderung der längenveränderlichen Querverbindung bewirkt, die dadurch teleskopartig zusammengeschoben bzw. auseinandergezogen wird.

Weiterhin ist vorteilhaft denkbar, Adapteraufnahmen zur Aufnahme des wenigstens einen Einsatzes an der längenveränderlichen Querverbindung vorzusehen. So ist der wenigstens ein Einsatz mithilfe von daran angeordneten Adaptern auf den Adapteraufnahmen aufsetzbar und lösbar befestigbar. Hierdurch kann wenigstens ein Einsatz in dem Kinderwagen angeordnet und lösbar befestigt werden.

In einer weiteren vorteilhaften Ausgestaltung des zusammenklappbaren und in seiner Breite veränderbaren Kinderwagens ist vorgesehen, dass die längenveränderliche Querverbindung teleskopartig bestehend aus wenigstens zwei Außenteilen und wenigstens einem Mittelteil ausgebildet ist, wobei zwischen den wenigstens zwei Außenteilen das wenigstens eine Mittelteil zumindest teilweise aufgenommen ist. Die wenigstens zwei Außenteile sind hierbei als Hohlprofil und das wenigstens eine Mittelteil als ein Voll- oder Hohlprofil ausgebildet, wobei das wenigstens eine Mittelteil formschlüssig in die wenigstens zwei Außenteile aufnehmbar ist. Die wenigstens zwei Außenteile lassen sich derart aufeinander zubewegen, dass das wenigstens eine Mittelteil vollständig in ihnen aufgenommen ist. Diese teleskopartige Bewegung, bei welcher die wenigstens zwei Außenteile und das wenigstens eine Mittelteil zusammen- oder auseinandergeschoben werden, bewirkt die Längenveränderung der längenveränderlichen Querverbindung. Es ist weiterhin denkbar, dass in den wenigstens zwei Außenteilen jeweils wenigstens ein Federelement angeordnet ist, welches eine symmetrische Kraft auf das wenigstens eine Mittelteil bewirkt, sodass dieses stets zu gleichen Teilen in die wenigstens zwei Außenteile eingeschoben bzw. ausgefahren ist. Die beidseitige Kraftbeaufschlagung des wenigstens einen Mittelteils durch die Federelemente bewirkt, dass das wenigstens eine Mittelteil stets mittig zwischen den wenigstens zwei Außenteilen angeordnet ist.

Die wenigstens zwei Außenteile und das wenigstens eine Mittelteil sind vorteilhaft aus Kunststoff, Verbundmaterial, Metall oder aus einer Metalllegierung ausgebildet. Hierbei können die wenigstens zwei Außenteile und das wenigstens eine Mitteilteil aus einem Material oder aber auch aus unterschiedlichen Materialien ausgebildet sein.

Es ist denkbar, dass die für die längenveränderliche Querverbindung vorgesehenen Profile, d.h. Hohlprofil und/oder Vollprofil, neben einer runden Form auch oval oder eckig ausgebildet sein können. Hierunter sind bspw. quaderförmige, quadratische, oder dreieckige Profilformen zu verstehen. Das ist aber nicht beschränkend zu verstehen, sodass auch vieleckige Profile mit regelmäßiger oder unregelmäßiger Profilform vorgesehen sein können. Profil bzw. Profilform meint hier stets die Querschnittsform.

Es ist weiterhin vorteilhaft auch denkbar, dass die längenveränderliche Querverbindung wenigstens zwei Außenteile und wenigstens ein Mittelteil aufweist, die teleskopartig angeordnet sind, wobei die wenigstens zwei Außenteile von dem wenigstens einen Mittelteil wenigstens zum Teil aufgenommen sind. Hierbei können die wenigstens zwei Außenteile teleskopartig in das wenigstens eine Mittelteil eingeschoben werden. Es ist weiterhin denkbar, dass in dem wenigstens einen Mittelteil wenigstens ein Federelement angeordnet ist, welches eine symmetrische Kraft auf die wenigstens zwei Außenteile bewirkt, sodass diese stets zu gleichen Teilen in das wenigstens eine Mittelteil eingeschoben bzw. ausgefahren sind.

In einer weiteren vorteilhaften Ausgestaltung des zusammenklappbaren und in seiner Breite veränderbaren Kinderwagens ist vorgesehen, dass die längenveränderliche Querverbindung wenigstens zwei Adapteraufnahmen zum lösbaren Befestigen eines Einsatzes aufweist, wobei die wenigstens zwei Adapteraufnahmen an dem wenigstens einem Mittelteil und/oder jeweils an wenigstens einem Außenteil entlang der Längserstreckung der längenveränderlichen Querverbindung verschiebbar und/oder um die Längserstreckung der längenveränderlichen Querverbindung herum verschwenkbar angeordnet sind. Des Weiteren ist auch denkbar, dass die Adapteraufnahmen von der längenveränderlichen Querverbindung abnehmbar ausgebildet sind.

Mithilfe der Adapteraufnahmen ist der Einsatz, welcher selbst vorteilhaft Adapter aufweist und in den bspw. ein Kind gelegt und/oder gesetzt werden kann, an der längenveränderlichen Querverbindung und damit am Kinderwagengestell befestigbar.

Die Adapter des Einsatzes werden hierbei mit den Adapteraufnahmen der längenveränderlichen Querverbindung in Wirkverbindung gebracht. Sie können bspw. aufgesteckt und eingeklickt werden. Eine Klickverbindung wird hierbei vorteilhaft über Rastnasen und entsprechende Rastvertiefungen an den Adapteraufnahmen und entsprechend dazu komplementär an den Adaptern des an die längenveränderliche Querverbindung anzubringenden Einsatzes.

Weiterhin ist in einer vorteilhaften Ausgestaltung denkbar, dass die längenveränderliche Querverbindung einen Scherenmechanismus zur Längenveränderung der längenveränderlichen Querverbindung aufweist. Mithilfe des Scherenmechanismus ist es möglich, die längenveränderliche Querverbindung in ihrer Länge zu verändern. Mit der Längenveränderung der längenveränderlichen Querverbindung geht gleichzeitig eine Breitenverstellung des Kinderwagengestells einher, da die längenveränderliche Querverbindung ein wesentlicher Bestandteil des Kinderwagengestells ist. Der Scherenmechanismus gibt vorteilhaft die längenverändernde bzw. breitenverändernde Bewegung der längenveränderlichen Querverbindung vor. Hierdurch ist einerseits eine einfache Bedienung der längenveränderlichen Querverbindung möglich. Andererseits wird einer Fehlbedingung vorgebeugt. Die Längenveränderung der längenveränderlichen Querverbindung erfolgt intuitiv und wird durch den Scherenmechanismus eindeutig vorgegeben.

Weiterhin vorteilhaft ist denkbar, dass die längenveränderliche Querverbindung mithilfe des Scherenmechanismus in wenigstens zwei Positionen arretierbar ausgebildet ist, wobei die erste Position eine Grundposition und die zweite Position eine gegenüber der Grundposition verbreiterte Spreizposition ist. Diese Positionen sind ebenfalls auch auf den Kinderwagen bzw. das Kinderwagengestell übertragbar, dass in der Grundposition eine geringere Breite aufweist als in der Spreizposition.

In der Grundposition sind die wenigstens zwei Außenteile und das wenigstens eine Mittelteil der längenveränderlichen Querverbindung zusammengeschoben. Die längenveränderliche Querverbindung weist in dieser Position ihre geringste Längserstreckung auf. Das bedeutet wiederum, dass das Kinderwagengestell für einen Kinder- oder Puppenwagen wiederum seine geringste Breite aufweist. Der Scherenmechanismus ist in dieser Position geschlossen. In dieser Position ist vorteilhaft nur ein Einsatz an der längenveränderlichen Querverbindung anordenbar. In der Grundposition bildet das Kinderwagengestell durch die längenveränderliche Querverbindung in ihrer geringsten Längserstreckung einen Einzelwagen aus, der gegenüber einem Zwillingswagen weniger breit ist.

In der Spreizposition weist die längenveränderliche Querverbindung ihre größte Längserstreckung auf. Die wenigstens zwei Außenteile und das wenigstens eine Mittelteil sind auseinandergeschoben. Das Kinderwagengestell mit der längenveränderlichen Querverbindung weist dadurch seine größte Breite auf. Der Scherenmechanismus ist in dieser Position maximal geöffnet. In dieser Position sind vorteilhaft zwei Einsätze an der längenveränderlichen Querverbindung anordenbar. Das Wagengestell bildet hierdurch einen Zwillingswagen aus, welcher gegenüber einem Einzelwagen verbreitert ist.

Durch Betätigung des Scherenmechanismus kann zwischen der Grundposition und der Spreizposition hin- und hergewechselt werden. Hierbei muss lediglich der Scherenmechanismus entsprechend geöffnet oder geschlossen werden, was wiederum eine Längenveränderung der längenveränderlichen Querverbindung und damit eine Verbreiterung bzw. eine Verschmälerung des Kinderwagengestells für einen Kinder- oder Puppenwagen bewirkt.

Es ist aber auch denkbar, die längenveränderliche Querverbindung derart auszubilden, dass ein Einzelwagen, ein Zwillingswagen oder sogar ein Drillingswagen konfigurierbar ist. Hierzu können auch mehr als ein Scherenmechanismus an der längenveränderlichen Querverbindung angeordnet sein.

In einer weiteren vorteilhaften Ausgestaltung des zusammenklappbaren und in seiner Breite veränderbaren Kinderwagens ist vorgesehen, dass zwischen Bodengruppe und Kinderwagengestell wenigstens ein Federelement angeordnet ist, das die Bodengruppe und das Kinderwagengestell federbeweglich miteinander verbindet.

Einerseits kann durch die federbewegliche Verbindung zwischen Kinderwagengestell und Bodengruppe ein besonderer Fahrkomfort gewährleistet werden. Das wenigstens eine Federelement nimmt hierbei Stöße auf, die beim Fahren des Kinderwagens über bspw. Unebenheiten sich auf die Räder und die Bodengruppe übertragen.

Weiterhin bewirkt das wenigstens eine Federelement einen Abstand zwischen Bodengruppe und Kinderwagengestell, sodass diese beiden Komponenten nicht selbstständig zusammenklappen können. Das wenigstens eine Federelement kann mit einem Ende an der Bodengruppe und mit einem anderen Ende, das dem ersten Ende gegenüberliegt, an dem Kinderwagengestell schwenkbeweglich angelenkt sein.

Es ist ebenfalls denkbar, dass wenigstens eine Federelement als ein Feder-Dämpfer-System auszubilden, sodass hierdurch ein besonders hoher Federungskomfort bereitgestellt werden kann, der sowohl federt als auch dämpft und hierdurch besonders effektiv und sanft Stöße auf den Kinderwagen bzw. auf die Bodengruppe aufnimmt.

In einer weiteren vorteilhaften Ausgestaltung des zusammenklappbaren und in seiner Breite veränderbaren Kinderwagens ist vorgesehen, dass das wenigstens eine Federelement mit einem Ende schwenkbeweglich an der längenveränderlichen Querverbindung des Kinderwagengestells und mit einem anderen Ende schwenkbeweglich an einem der Hohlprofile des Chassis angeordnet ist und diese federbeweglich miteinander verbindet. Die Enden des Federelements liegen sich gegenüber. Weiterhin bewirkt das wenigstens eine Federelement einen Abstand zwischen der längenveränderlichen Querverbindung des Kinderwagengestells und dem Chassis, sodass diese beiden Komponenten nicht selbstständig zusammenklappen können.

Es ist weiterhin besonders vorteilhaft denkbar, für den Kinderwagen zwei Federelemente vorzusehen, die symmetrisch zueinander an einem der Hohlprofile des Chassis und an der einen längenveränderlichen Querverbindung des Kinderwagengestells angeordnet sind. Hierdurch erhält der Kinderwagen insgesamt eine sehr hohe Stabilität.

In einer weiteren vorteilhaften Ausgestaltung des zusammenklappbaren und in seiner Breite veränderbaren Kinderwagens ist vorgesehen, dass das wenigstens eine Federelement eine Gasdruckfeder ist. Eine solche Gasdruckfeder ist vorteilhaft schlank und leicht. Gleichzeitig ist sie robust und langlebig. Es ist vorteilhaft denkbar, dass die Gasdruckfeder gleichzeitig ein Feder-Dämpfer-System ist, wodurch ein hoher Fahrkomfort des Kinderwagens bewirkbar ist. Weiterhin ist denkbar, dass die Gasdruckfeder in wenigstens einer eingefahrenen, gespannten Position lösbar arretierbar ist. So kann das Kinderwagengestell zusammengeklappt sein, ohne dass es sich infolge der Federkraft der Gasdruckfeder wieder selbstständig auseinanderklappt. Es ist ebenfalls denkbar, das Kinderwagengestell so weit zum Chassis hin einzuklappen, dass sich die dazwischen angeordnete Gasdruckfeder bzw. Gasdruckfedern - für den Fall, dass mehrere Gasdruckfedern angeordnet sind - in einem Totpunkt befinden und sich nicht mehr selbstständig ohne äußere laterale Krafteinwirkung auf das Kinderwagengestell entspannen und damit das Kinderwagengestell wieder aufklappen.

In einer weiteren vorteilhaften Ausgestaltung des zusammenklappbaren und in seiner Breite veränderbaren Kinderwagens ist vorgesehen, dass der Kinderwagen in zwei Positionen, nämlich eine erste, ausgeklappte Gebrauchsposition und eine zweite, zusammengeklappte Nichtgebrauchsposition, arretierbar ausgebildet ist, wobei hierfür am Kinderwagengestell und/oder an der Bodengruppe Rastmittel zur Arretierung des Kinderwagens in wenigstens einer der zwei Positionen vorgesehen sind. Die ausgeklappte Gebrauchsposition kann auch als Fahrposition und die zusammengeklappte Nichtgebrauchsposition als Transportposition oder Verstauposition bezeichnet werden. In der zusammengeklappte Nichtgebrauchsposition kann der Kinderwagen besonders vorteilhaft zum Beispiel in einem Kofferraum eines Automobils verstaut werden. Es ist weiterhin vorteilhaft denkbar, dass die Rastmittel direkt in den Schwenkachsen angeordnet sind.

Es ist weiterhin denkbar, dass das Kinderwagengestell in Bezug auf die Bodengruppe derart verschwenkbar ist, dass die jeweils von den beiden Komponenten aufgespannten Ebenen in der zusammengeklappten Position vollständig zusammenfallen. Der Verschwenkungswinkel beträgt 0°. Das zwischen Bodengruppe und Kinderwagengestell bzw. zwischen Chassis und längenveränderliche Querverbindung angeordnete wenigstens eine Federelement ist hierbei auf seine geringste Längenerstreckung zusammengedrückt und gespannt. In dieser Anordnung kann die Federkraft des wenigstens einen Federelements ohne eine zur Federkraft lateralen Kraftbeaufschlagung von außen den Kinderwagen wieder selbstständig aufklappen. Das wenigstens eine Federelement befindet sich in einem sog. Totpunkt. Der Kinderwagen ist in dieser zusammengeklappten Position von sich aus arretiert. Zusätzliche Arretierungsmittel können so besonders klein und platzsparend sein, da diese nur sehr kleine, zur Federkraft laterale Kräfte von außen aufnehmen und nicht zusätzlich gegen die Federkraft des wenigstens einen Federelements wirken müssen.

In einer weiteren vorteilhaften Ausgestaltung des zusammenklappbaren und in seiner Breite veränderbaren Kinderwagens ist vorgesehen, dass das wenigstens eine Federelement durch dessen Federkraft das Kinderwagengestell aufgeklappt stützt. Es wirkt hierbei federnd, was wiederum für Fahrkomfort sorgt. Durch die vom wenigstens einen Federelement bewirkte Federkraft sind Bodengruppe und Kinderwagengestell bzw. Chassis und längenveränderliche Querverbindung voneinander beabstandet. Das Federelement bewirkt ein Öffnen des Verschwenkungswinkels zwischen Bodenelement und Kinderwagengestell.

Zusätzlich zu den obengenannten Ausführungsformen ist ebenfalls denkbar, dass im Kinderwagengestell parallel zu der einen Schwenkachse, die als eine längenveränderliche Querverbindung ausgebildet ist, weitere längenveränderliche Querverbindungen vorgesehen sind. Sie können hierbei als einfache, teleskopartig verlängerbare Querverstrebungen oder Querstangen ausgebildet sein. Sie erhöhen einerseits die Stabilität des Kinderwagengestells und verhindern andererseits vorteilhaft ein Verkannten des Kinderwagengestells bei einer Breitenänderung, wodurch die Breitenverstellung einfach und sicher erfolgen kann.

Schließlich ist in einer weiteren, vorteilhaften Ausgestaltung des zusammenklappbaren und in seiner Breite veränderbaren Kinderwagens denkbar, dass der Kinderwagen in zwei unterschiedlichen Breitenpositionen arretierbar ist, wobei der Kinderwagen in einer ersten Breitenposition als Einzelwagen ausgebildet ist und in einer zweiten Breitenposition, die gegenüber der ersten Breitenposition eine größere Breite aufweist, als Zwillingswagen ausgebildet ist. Es sind vorteilhaft hierbei zwei Einsätze nebeneinander anordenbar, wobei die zwei Einsätze gleichzeitig vom Kinderwagengestell aufgenommen sind.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1a: eine perspektivische Ansicht eines zusammenklappbaren und in seiner Breite veränderbaren Kinderwagens in einer ausgeklappten Position
- Fig. 1b: eine perspektivische Ansicht eines weiteren zusammenklappbaren und in seiner Breite veränderbaren Kinderwagens in einer ausgeklappten Position
- Fig. 2a: eine Seitenansicht des zusammenklappbaren und in seiner Breite veränderbaren Kinderwagens in der ausgeklappten Position
- Fig. 2b: die Seitenansicht des zusammenklappbaren und in seiner Breite veränderbaren Kinderwagens in einer Zwischenposition zwischen der ausgeklappten Position und einer zusammengeklappten Position
- Fig. 2c: die Seitenansicht des zusammenklappbaren und in seiner Breite veränderbaren Kinderwagens in der zusammengeklappten Position
- Fig. 3: die perspektivische Ansicht des zusammenklappbaren und in seiner Breite veränderbaren Kinderwagens in der ausgeklappten Position mit einem Einsatz
- Fig. 4: die perspektivische Ansicht des zusammenklappbaren und in seiner Breite veränderbaren Kinderwagens in der ausgeklappten Position mit zwei Einsätzen
- Fig. 5: eine perspektivische Ansicht einer längenveränderlichen Querverbindung in einer Spreizposition
- Fig. 6: eine perspektivische Ansicht einer weiteren längenveränderlichen Querverbindung in einer Spreizposition
- Fig. 7: eine perspektivische Ansicht der weiteren längenveränderlichen Querverbindung in der Spreizposition mit drei daran angeordneten Einsätzen

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

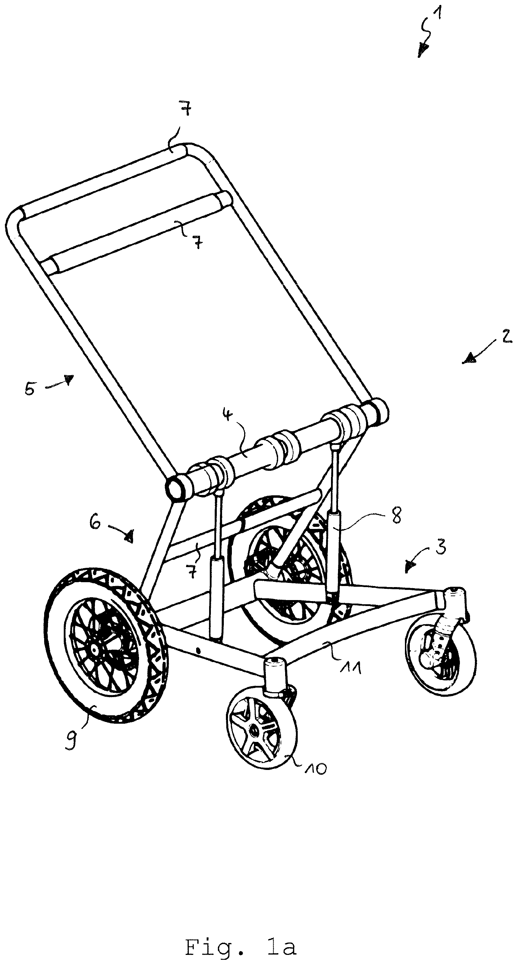

In Fig. 1a ist eine perspektivische Ansicht eines zusammenklappbaren und in seiner Breite veränderbaren Kinderwagens 1 in einer ausgeklappten Position gezeigt. Zuunterst befindet sich eine Bodengruppe des Kinderwagens 1 bestehend aus einem Chassis 3, welches trapezförmig ausgebildet ist, dessen vier Kanten Hohlprofile 11 sind. An jeder Ecke des Chassis 3 sind Räder angeordnet, wobei hier zwei Hinterräder 9 und zwei Vorderräder 10 vorgesehen sind. Die Hinterräder 9 sind in der gezeigten Ausführungsform als Speichenräder ausgebildet. Es ist aber auch denkbar, diese in jeglicher anderen Radform auszubilden. Die Vorderräder 10 sind jeweils im Nachlauf gelagert, sodass sie sich stets selbstständig in die jeweils eingeschlagene Fahrtrichtung des Kinderwagens 1 einlenken.

An das Chassis 3 ist über eine Schwenkachse, die zwischen den beiden Hinterrädern 9 angeordnet ist und entlang der Längserstreckung des Hohlprofils 11 zwischen den beiden Hinterrädern 9 verläuft, ein Kinderwagengestell 2 schwenkbeweglich angeordnet. Das Kinderwagengestell 2 ist wiederum in einen oberen Abschnitt 5 und in einen unteren Abschnitt 6 unterteilt, wobei die beiden Abschnitte 5, 6 über eine weitere Schwenkachse, die hier gleichzeitig als eine längenveränderliche Querverbindung 4 ausgebildet ist und parallel zur ersten Schwenkachse ist, verbunden sind. Oberer Abschnitt 5 und unterer Abschnitt 6 weisen im Wesentlichen jeweils eine Rechteckform auf. Mit einer Längenveränderung der längenveränderlichen Querverbindung 4 wird gleichzeitig eine Breitenänderung des Kinderwagens 1 insgesamt bewirkt.

Die beiden Abschnitte 5, 6 sowie das Chassis 3 spannen jeweils eine Ebene auf. Die aufgespannte Ebene des Chassis 3 sowie die aufgespannte Ebene des unteren Abschnitts 6 des Kinderwagengestells 2 bilden in der Schwenkachse zwischen den Hinterrädern 9 einen Verschwenkungswinkel aus. Dieser Verschwenkungswinkel kann eine Größe von 0° bis maximal 75° annehmen. Bei einem Verschwenkungswinkel zwischen 0° und maximal 20° befindet sich der Kinderwagen 1 in einem zusammengeklappten Zustand. Er befindet sich in dieser Position in einem Nichtgebrauchszustand. Bei einem Verschwenkungswinkel von 60° und maximal 75° befindet sich der Kinderwagen 1 in einem ausgeklappten Zustand. Er befindet sich in dieser Position in einem Gebrauchszustand.

Zwischen Chassis 3 und längenveränderlichen Querverbindung 4, die gleichzeitig die Schwenkachse zwischen oberem Abschnitt 5 und unterem Abschnitt 6 des Kinderwagengestells 2 ist, sind zwei Gasdruckfedern 8 angeordnet. Sie sind jeweils mit ihrem unteren Ende an einem seitlichen Hohlprofil 11 des Chassis 3 schwenkbeweglich angeordnet. Die seitlichen Hohlprofile 11 verbinden jeweils ein Hinterrad 9 mit einem Vorderrad 10. Mit dem anderen Ende sind die Gasdruckfedern 8 jeweils an der längenveränderlichen Querverbindung 4 schwenkbeweglich angeordnet. Die Gasdruckfedern 8 beabstanden die längenveränderliche Querverbindung 4 zum Chassis 3 und öffnen gleichzeitig durch ihre Federkraft den Verschwenkungswinkel zwischen Chassis 3 und unterem Abschnitt 6 des Kinderwagengestells 2.

Der untere Abschnitt 6 des Kinderwagengestells 2 weist eine längenveränderliche Querverbindung 7 und der obere Abschnitt 5 des Kinderwagengestells 2 weist zwei längenveränderliche Querverbindungen 7 auf, wobei die oberste längenveränderliche Querverbindung 7 auch als Griff zum Schieben des Kinderwagens 1 dienen kann. Die längenveränderlichen Querverbindungen 7 dienen der Stabilisierung des Kinderwagengestells 2 und verhindern ein Verkannten bei der Breitenveränderung des Kinderwagens 1. Die längenveränderlichen Querverbindungen 7 sind jeweils parallel zu den Schwenkachsen des Kinderwagens 1 ausgerichtet.

Die Anordnung der oben aufgeführten Komponenten des Kinderwagens 1 sind, sofern sie zweifach vorhanden sind, symmetrisch zueinander angeordnet, wobei die Symmetrieebene mittig zwischen den beiden Hinterrädern 9 und senkrecht zu deren Hinterradachsen verläuft. Alle weiteren Komponenten, die von der genannten Symmetrieebene geschnitten werden, sind ebenfalls beidseitig symmetrisch zueinander ausgebildet.

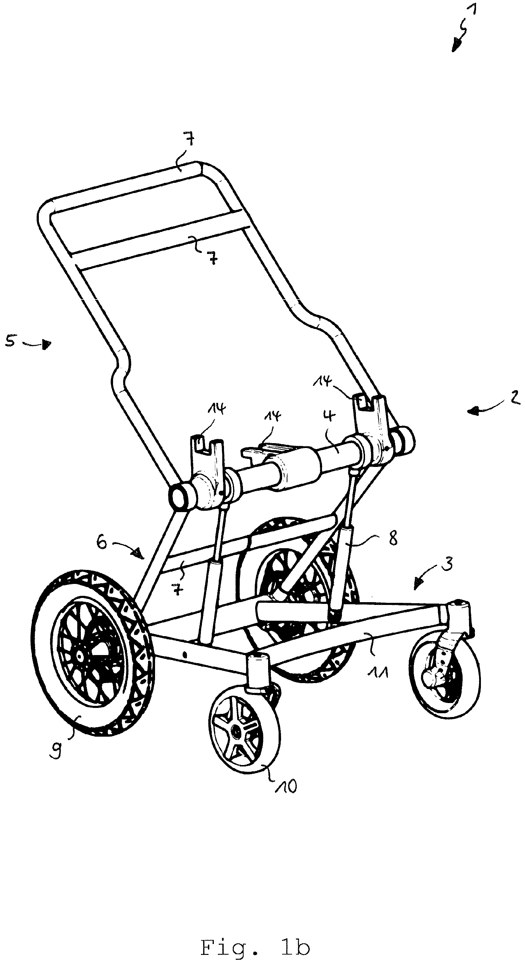

In Fig. 1b ist eine perspektivische Ansicht eines weiteren zusammenklappbaren und in seiner Breite veränderbaren Kinderwagens 1 in einer ausgeklappten Position gezeigt, wobei der obere Abschnitt eine beidseitige Abstufung aufweist. Das Kinderwagengestell 2 verengt sich nach oben hin dadurch. Ansonsten entspricht der gezeigte Kinderwagen 1 im Wesentlichen dem aus Fig. 1a. Ein weiterer Unterschied ist die längenveränderliche Querverbindung 4 ist, dass diese Adapteraufnahmen 14 entlang ihrer Längserstreckung aufweist. Im Bereich der äußeren Enden der längenveränderlichen Querverbindung 4 ist jeweils eine Adapteraufnahme 14 angeordnet, die senkrecht nach oben hin ausgerichtet sind und sich so in einer Gebrauchsposition befinden, in welcher ein Einsatz 13 (hier nicht dargestellt) lösbar befestigt werden kann. In der Mitte der längenveränderlichen Querverbindung 4 sind zwei weitere Adapteraufnahmen 14 angeordnet, die sich in einer Nichtgebrauchsposition befinden und dementsprechend gegenüber den Adapteraufnahmen 14 in der Gebrauchsposition um 90° nach hinten verschwenkt sind. Sie sind demnach horizontal ausgerichtet und geben so den Bereich in der Mitte oberhalb der längenveränderlichen Querverbindung 4 frei.

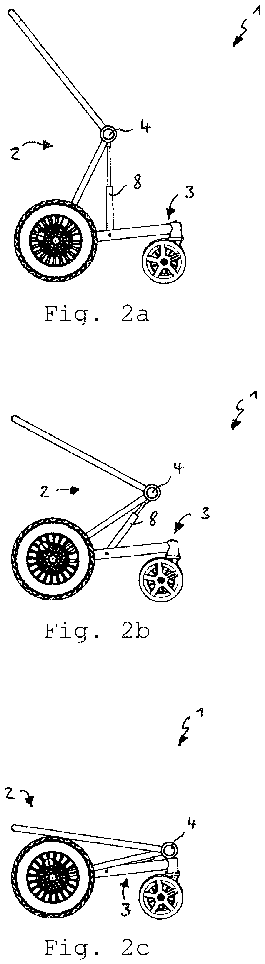

In Fig. 2a ist eine Seitenansicht des zusammenklappbaren und in seiner Breite veränderbaren Kinderwagens 1 in der ausgeklappten Position gezeigt. Der Kinderwagen 1 entspricht dem aus Fig. 1. Die Gasdruckfeder 8 beabstandet die längenveränderliche Querverbindung 4 zum Chassis 3 und öffnet einen Verschwenkungswinkel zwischen Kinderwagengestell 2 und Chassis 3.

In Fig. 2b ist die Seitenansicht des zusammenklappbaren und in seiner Breite veränderbaren Kinderwagens 1 in einer Zwischenposition zwischen der ausgeklappten Position und einer zusammengeklappten Position gezeigt.

In Fig. 2c ist die Seitenansicht des zusammenklappbaren und in seiner Breite veränderbaren Kinderwagens 1 in der zusammengeklappten Position gezeigt.

Alle drei Figuren Fig. 2a, Fig. 2b und Fig. 2c zeigen denselben Kinderwagen 1 in unterschiedlichen Klapppositionen.

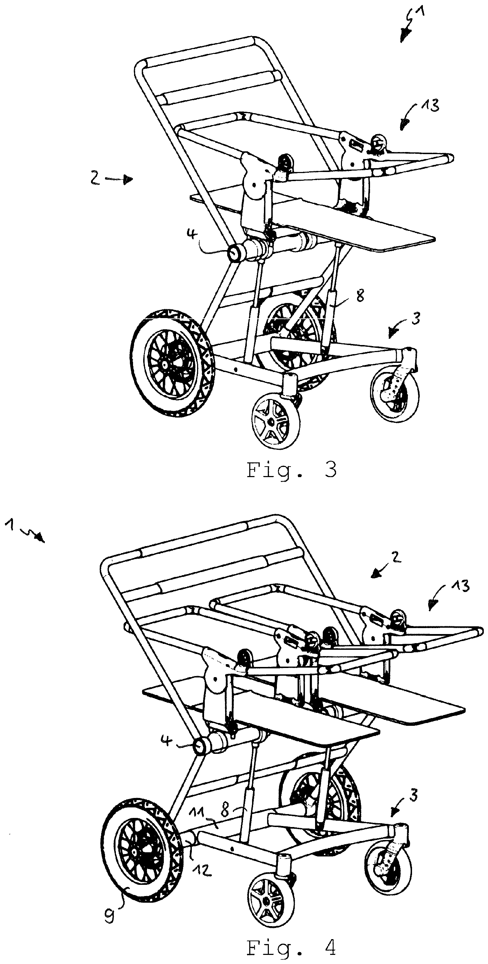

In Fig. 3 ist die perspektivische Ansicht des zusammenklappbaren und in seiner Breite veränderbaren Kinderwagens 1 in der ausgeklappten Position mit einem Einsatz 13 gezeigt, wobei der Kinderwagen 1 dem der vorherigen Figuren entspricht. Zusätzlich ist mittig ein Einsatz 13 in das Kinderwagengestell 2 aufgenommen. Es ist mittig auf der längenveränderlichen Querverbindung 4 angeordnet. Die längenveränderliche Querverbindung 4 mit dem daran angeordneten Einsatz 13 sind durch die beiden darunter angeordneten Gasdruckfedern 8 vom Chassis 3 beabstandet.

In der gezeigten Ausführungsform mit einem Einsatz 13 kann im Zusammenhang mit dem Kinderwagen 1 auch von einem Einzelwagen gesprochen werden.

In Fig. 4 ist die perspektivische Ansicht des zusammenklappbaren und in seiner Breite veränderbaren Kinderwagens 1 in der ausgeklappten Position mit zwei Einsätzen 13 gezeigt. Hierfür ist der Kinderwagen 1 gegenüber den vorherigen Figuren verbreitert, wobei die längenveränderliche Querverbindung 4 in ihrer Längserstreckung verlängert wurde. Infolgedessen sind auch die anderen längenveränderlichen Querverbindungen 7 teleskopartig auseinandergezogen. Das Chassis 3 ist starr und unverändert. Die Hinterräder 9 haben entsprechend der Verbreiterung des Kinderwagens 1 auch einen größeren Abstand zueinander. Hierbei sieht man eine längenveränderliche Achse 12, die die zwei Hinterräder 9 miteinander verbindet und von dem hinteren Hohlprofil 11 des Chassis 3, was sich zwischen den Hinterrädern 9 befindet, aufgenommen.

Auf der längenveränderlichen Querverbindung 4 sind nebeneinander die zwei Einsätze 13 angeordnet. In der gezeigten Ausführungsform mit zwei Einsätzen 13 nebeneinander kann im Zusammenhang mit dem Kinderwagen 1 auch von einem Zwillingswagen gesprochen werden.

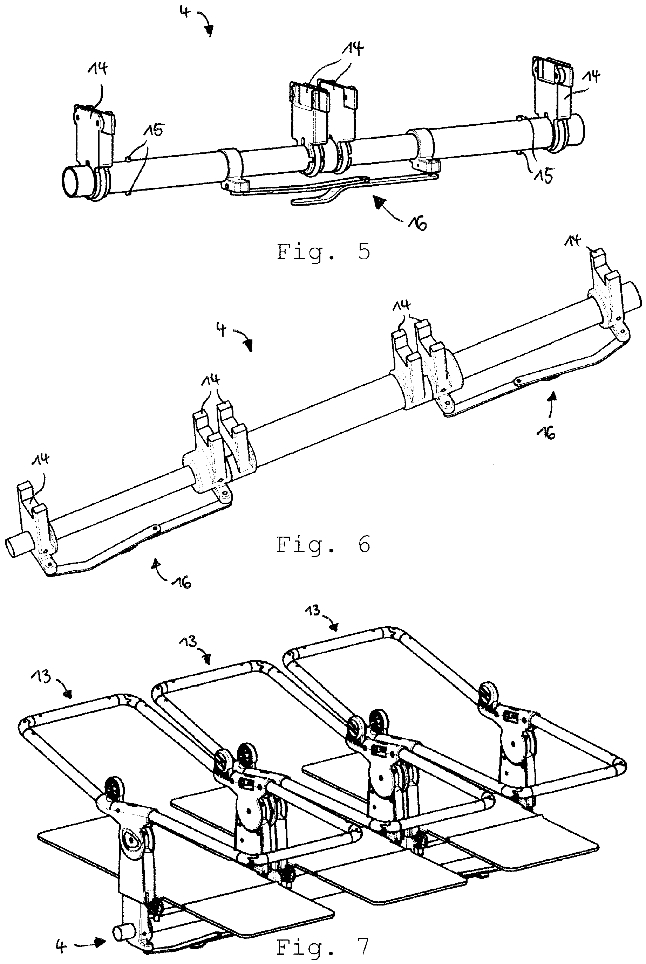

In der Fig. 5 ist eine perspektivische Ansicht einer längenveränderlichen Querverbindung 4 in einer Spreizposition gezeigt, in welcher sie ihre maximale Längserstreckung aufweist. Die längenveränderliche Querverbindung 4 weist in der gezeigten Ausführungsform ein Mittelteil und zwei Außenteile auf, wobei das Mittelteil zwischen den beiden Außenteilen angeordnet ist und von diesen zum Teil teleskopisch aufgenommen ist. Hierdurch lässt sich die längenveränderliche Querverbindung 4 zusammen- und auseinanderschieben, wobei das Mittelteil und die Außenteile ineinander- bzw. auseinander geschoben werden. In der gezeigten Spreizposition weist die längenveränderliche Querverbindung 4 ihre größte Längserstreckung auf.

Unterhalb der längenveränderliche Querverbindung 4 ist ein geöffneter Scherenmechanismus 16 bestehend aus einem ersten Hebel und einem zweiten Hebel angeordnet. Ein Ende des zweiten Hebels ist an dem zum Mittelteil zugewandten Ende eines Außenteils angelenkt. Das gegenüberliegende Ende des zweiten Hebels ist im Bereich der Mitte des ersten Hebels angeordnet. Ein Ende des ersten Hebels ist an dem zum Mittelteil zugewandten Ende des anderen Außenteils angelenkt. Das gegenüberliegende Ende des ersten Hebels ist freistehend. Es kann von einem Benutzer gegriffen und entsprechend der Anlenkung des ersten Hebels an dem einen Außenteil bewegt bzw. um dessen Anlenkung herum umgelegt werden. Dabei kann der Scherenmechanismus 16 geschlossen oder umgekehrt geöffnet werden, was die längenveränderliche Querverbindung 4 zusammenschieben bzw. auseinanderschieben würde. In der gezeigten Ausführungsform ist der Scherenmechanismus 16 geöffnet, sodass die beiden Enden der Hebel, die an den Außenteilen angelenkt sind, voneinander wegzeigen und ihren größten Abstand zueinander aufweisen. Das freie Ende des ersten Hebels zeigt hierbei in Richtung des Anlenkungspunkts zwischen Außenteil und zweitem Hebel.

Die längenveränderliche Querverbindung 4 weist weiterhin vier Adapteraufnahmen 14 auf, wobei zwei Adapteraufnahmen 14 mittig am Mittelteil und jeweils eine Adapteraufnahme 14 im Bereich der äußeren Enden der beiden Außenteile angeordnet sind. Alle vier Adapteraufnahmen 14 sind senkrecht nach oben hin ausgerichtet. Sie umschließen mit einem Teil ringförmig die Außenteile bzw. das Mittelteil und sind gleichzeitig an diesen verschiebbar und schwenkbar ausgebildet.

Weiterhin sind an den beiden Außenteilen jeweils vier Arretierpunkte 15 in Form von radial nach außen abstehenden Stiften angeordnet. Sie sind paarweise diametral zueinander angeordnet. In der gezeigten Ausführungsform sind jeweils zwei Paar der Arretierpunkte 15 an jedem der Außenteile angeordnet, wobei jeweils ein Paar an jedem Außenteil von der jeweils dort angeordneten Adapteraufnahme 14 verdeckt wird.

Das Mittelteil weist ebenfalls Arretierpunkte 15 auf. Am Mittelteil sind mittig zwei Paar Arretierpunkte 15 angeordnet. In der gezeigten Ausführungsform sind sie jedoch nicht zu sehen, da sie von den beiden mittig angeordneten Adapteraufnahmen 14 verdeckt werden.

Die Adapteraufnahmen 14 sind über Ausnehmungen an den Arretierpunkten 15 befestigbar. Im Bereich der nach außen gerichteten Enden der Außenteile sind die jeweiligen Adapteraufnahmen 14 zwischen den dort angeordneten Arretierpunkten 15 verschiebbar. In der gezeigten Ausführung sind die beiden äußeren Adapteraufnahmen 14 an den äußersten Arretierpunkten 15 der Außenteile befestigt. Sie verdecken gleichzeitig die genannten äußersten Arretierpunkte 15.

Die Adapteraufnahmen 14 sind in der gezeigten Konfiguration geeignet, zwei Einsätze 13 (hier nicht dargestellt) aufzunehmen und nebeneinander an der längenveränderlichen Querverbindung 4 anzuordnen. Die längenveränderliche Querverbindung 4 als Teil eines Kinderwagengestells 2 bildet den Kinderwagen 1 in der Spreizposition als Zwillingswagen aus.

In der Fig. 6 ist eine perspektivische Ansicht einer weiteren längenveränderlichen Querverbindung 4 in einer Spreizposition gezeigt, wobei die längenveränderliche Querverbindung gegenüber der in Fig. 5 gezeigten Ausführungsform dazu geeignet ist, drei Einsätze 13 (hier nicht gezeigt) aufzunehmen und nebeneinander über entsprechende Adapteraufnahmen 14 anzuordnen. Die längenveränderliche Querverbindung 4 weist an ihren beiden äußeren Abschnitten jeweils einen Scherenmechanismus 16 auf. Insgesamt sind sechs Adapteraufnahmen 14 an der längenveränderlichen Querverbindung 4 angeordnet, wobei die jeweils beiden äußeren Adapteraufnahmen 14 über jeweils einen Scherenmechanismus 16 miteinander verbunden sind. Mit Öffnen und Schließen des Scherenmechanismus 16 lassen sich die Abstände der jeweils äußeren beiden Adapteraufnahmen 14 verändern. So kann die längenveränderliche Querverbindung 4 mit zwei geöffneten Scherenmechanismen 16 gemeinsam mit einem Kinderwagengestell 2 (hier nicht dargestellt) einen Drillingswagen ausbilden. Bei einem geschlossenem und einem geöffneten Scherenmechanismus 16 kann die längenveränderliche Querverbindung 4 gemeinsam mit einem Kinderwagengestell 2 einen Zwillingswagen und mit zwei geschlossenen Scherenmechanismen 16 einen Einzelwagen ausbilden.

In der Fig. 7 ist eine perspektivische Ansicht der weiteren längenveränderlichen Querverbindung 4 in der Spreizposition mit drei daran angeordneten Einsätzen 13 gezeigt. Die gezeigte Ausführungsform der längenveränderlichen Querverbindung 4 entspricht der im Wesentlichen der aus Fig. 6, wobei zusätzlich an den Adapteraufnahmen 14 insgesamt drei Einsätze 13 nebeneinander angeordnet sind. Die Einsätze 13 sind so angeordnet, wie es für einen Drillingswagen vorgesehen ist.

### Bezugszeichenliste

- 1: Kinderwagen
- 2: Kinderwagengestell
- 3: Chassis
- 4: längenveränderliche Querverbindung
- 5: oberer Abschnitt
- 6: unterer Abschnitt
- 7: längenveränderliche Querverbindung
- 8: Gasdruckfeder
- 9: Hinterrad
- 10: Vorderrad
- 11: Hohlprofil
- 12: längenveränderliche Achse
- 13: Einsatz
- 14: Adapteraufnahme
- 15: Arretierpunkt
- 16: Scherenmechanismus

## Patentansprüche

1. Zusammenklappbarer und in seiner Breite veränderbarer Kinderwagen, wenigstens eine Bodengruppe mit wenigstens drei an der Bodengruppe angeordneten Rädern und ein zur Bodengruppe schwenkbar gekoppeltes Kinderwagengestell (2), das zur Aufnahme wenigstens eines Einsatzes (13) geeignet ist, aufweisend, wobei das Kinderwagengestell (2) über mindestens eine Schwenkachse in Richtung der Bodengruppe klappbar ist,
wobei das Kinderwagengestell (2) einen ersten, unteren Abschnitt (6) sowie einen zweiten, oberen Abschnitt (5) aufweist, wobei die beiden Abschnitte (5; 6) über eine weitere Schwenkachse gelenkig miteinander verbunden sind,
**dadurch gekennzeichnet, dass** die eine weitere Schwenkachse eine längenveränderliche Querverbindung (4) ist, die dazu geeignet ist, die Breite des Kinderwagens (1) zu verändern.

2. Zusammenklappbarer und in seiner Breite veränderbarer Kinderwagen nach Patentanspruch 1, **dadurch gekennzeichnet, dass** die Bodengruppe ein starres Chassis (3) aus Hohlprofilen (11) aufweist, und wobei in einem der Hohlprofile (11) eine längenveränderliche Achse (12) mit zwei Rädern an ihren äußeren Enden aufgenommen ist, wodurch die Räder in ihrem Abstand zueinander veränderbar sind.

3. Zusammenklappbarer und in seiner Breite veränderbarer Kinderwagen nach Patentanspruch 2, **dadurch gekennzeichnet, dass** das Chassis (3) dreiecksförmig, trapezförmig, rechteckig oder U-förmig ausgebildet ist.

4. Zusammenklappbarer und in seiner Breite veränderbarer Kinderwagen nach Patentanspruch 1, **dadurch gekennzeichnet, dass** die längenveränderliche Querverbindung (4) teleskopartig bestehend aus wenigstens zwei Außenteilen und wenigstens einem Mittelteil ausgebildet ist, wobei zwischen den wenigstens zwei Außenteilen das wenigstens eine Mittelteil zumindest teilweise aufgenommen ist.

5. Zusammenklappbarer und in seiner Breite veränderbarer Kinderwagen nach Patentanspruch 4, **dadurch gekennzeichnet, dass** die längenveränderliche Querverbindung (4) wenigstens zwei Adapteraufnahmen (14) zum lösbaren Befestigen eines Einsatzes (13) aufweist, wobei die wenigstens zwei Adapteraufnahmen (14) an dem wenigstens einem Mittelteil und/oder jeweils an wenigstens einem Außenteil entlang der Längserstreckung der längenveränderlichen Querverbindung (4) verschiebbar und/oder um die Längserstreckung der längenveränderlichen Querverbindung (4) herum verschwenkbar angeordnet sind.

6. Zusammenklappbarer und in seiner Breite veränderbarer Kinderwagen nach Patentanspruch 1, **dadurch gekennzeichnet, dass** zwischen Bodengruppe und Kinderwagengestell (2) wenigstens ein Federelement angeordnet ist, das die Bodengruppe und das Kinderwagengestell (2) federbeweglich miteinander verbindet.

7. Zusammenklappbarer und in seiner Breite veränderbarer Kinderwagen nach Patentanspruch 6, **dadurch gekennzeichnet, dass** das wenigstens eine Federelement mit einem Ende schwenkbeweglich an der längenveränderlichen Querverbindung (4) des Kinderwagengestells (2) und mit einem anderen Ende schwenkbeweglich an einem der Hohlprofile (11) des Chassis (3) angeordnet ist und diese federbeweglich miteinander verbindet.

8. Zusammenklappbarer und in seiner Breite veränderbarer Kinderwagen nach Patentanspruch 6 oder 7, **dadurch gekennzeichnet, dass** das wenigstens eine Federelement eine Gasdruckfeder (8) ist.

9. Zusammenklappbarer und in seiner Breite veränderbarer Kinderwagen nach Patenanspruch 1, **dadurch gekennzeichnet, dass** der Kinderwagen (1) in zwei Positionen, nämlich eine erste, ausgeklappte Gebrauchsposition und eine zweite, zusammengeklappte Nichtgebrauchsposition, arretierbar ausgebildet ist, wobei hierfür am Kinderwagengestell (2) und/oder an der Bodengruppe Rastmittel zur Arretierung des Kinderwagens (1) in wenigstens einer der zwei Positionen vorgesehen sind.

10. Zusammenklappbarer und in seiner Breite veränderbarer Kinderwagen nach Patentanspruch 6 oder 7, **dadurch gekennzeichnet, dass** das wenigstens eine Federelement durch dessen Federkraft das Kinderwagengestell (2) aufgeklappt stützt.

## Claims

1. Foldable and width-adjustable child carriage comprising at least one floor assembly with at least three wheels attached to it and one coupled in relation to the floor assembly swiveling coupled child carriage frame (2), which is suitable to hold at least one insert (13), wherein the child carriage frame (2) is foldable via at least one swivel axis in the direction of the floor assembly, wherein the child carriage frame (2) comprises a first, lower section (6) and a second, upper section (5), wherein both sections (5; 6) are connected flexibly to each other via a swivel axis, **characterized in, that** the one further axis is a variable-length cross-section (4), which is suitable to change the width of the child carriage (1).

2. Foldable and width-adjustable child carriage according to patent claim 1, **characterized in, that** the floor assembly comprises a rigid chassis (3) made from hollow profiles (11), and wherein a variable-length axis (12) is included in a hollow-profile (11) with two wheels at their outer ends, as a result of which the distance between the wheels is adjustable.

3. Foldable and width-adjustable child carriage according to patent claim 2, **characterized in, that** the chassis (3) is designed to be triangular, trapezoidal, rectangular or u-shaped.

4. Foldable and width-adjustable child carriage according to patent claim 1, **characterized in, that** the variable-length cross-section (4) is designed to be telescopic comprising of at least two outer parts and at least one middle part, wherein the at least one middle part is at least partially included between the at least two outer parts.

5. Foldable and width-adjustable child carriage according to patent claim 4, **characterized in, that** the lengthadjustable cross-section (4) comprises at least two adapter receptacles (14) for the detachable attachment of a insert (13), wherein the at least two adapter receptacles (14) are movably arranged at the middle part and/or each at least one outer part along the longitudinal extension of the variable-length cross-section (4) and/or swiveling arranged around the longitudinal extension of the variable-length cross-section (4).

6. Foldable and width-adjustable child carriage according to patent claim 1, **characterized in that**, that at least one spring element is arranged between the floor assembly and the child carriage frame (2), which connects the floor assembly and the child carriage frame (2) with each other in spring-loaded manner.

7. Foldable and width-adjustable child carriage according to patent claim 6, **characterized in, that** the at least one spring element is arranged pivotable with one end at the variable-length cross-section (4) of the child carriage frame (2) and with the other end pivotable at one hollow profile (11) of the chassis (3) and connects them with each other in a spring-loaded manner.

8. Foldable and width-adjustable child carriage according to patent claim 6 or 7, **characterized in that**, that the at least one spring element is a gas spring (8).

9. Foldable and width-adjustable child carriage according to patent claim 1, **characterized in, that** the child carriage (1) is designed to be lockable in two positions, namely a first, unfolded position of use and a second, folded nonuse position, wherein for this purpose latching means for locking the child carriage in at least one of the two positions are provided at the child carriage frame (2) and/or the floor assembly.

10. Foldable and width-adjustable child carriage according to patent claim 6 or 7, **characterized in,, that** the at least one spring element supports the child carriage frame (2) when unfolded via its spring force.

## Revendications

1. Voiture d'enfant pliable et de largeur modifiable, présentant au moins un groupe de base doté d'au moins trois roues disposées sur le groupe de base et un cadre de voiture d'enfant (2) accouplé de manière pivotante au groupe de base, lequel cadre est approprié à la réception d'au moins un insert (13), le cadre de voiture d'enfant (2) pouvant être replié en direction du groupe de base par le biais d'au moins un axe de pivotement,
le cadre de voiture d'enfant (2) présentant une première portion inférieure (6) ainsi qu'une deuxième portion supérieure (5), ces deux portions (5 ; 6) étant reliées l'une à l'autre de manière articulée par le biais d'un autre axe de pivotement,
**caractérisée en ce que** l'autre axe de pivotement est une liaison transversale (4) de longueur modifiable, qui est appropriée à modifier la largeur de la voiture d'enfant (1) .

2. Voiture d'enfant pliable et de largeur modifiable selon la revendication 1, **caractérisée en ce que** le groupe de base présente un châssis rigide (3) constitué de profilés creux (11), et un axe (12) de longueur modifiable doté de deux roues à ses extrémités extérieures étant reçu dans l'un des profilés creux (11), de sorte que la distance des roues l'une par rapport à l'autre puisse être modifiée.

3. Voiture d'enfant pliable et de largeur modifiable selon la revendication 2, **caractérisée en ce que** le châssis (3) est réalisé en forme de triangle, en forme de trapèze, en forme de rectangle ou en forme de U.

4. Voiture d'enfant pliable et de largeur modifiable selon la revendication 1, **caractérisée en ce que** la liaison transversale (4) de longueur modifiable est réalisée de façon télescopique de manière à être constituée d'au moins deux parties extérieures et d'au moins une partie centrale, l'au moins une partie centrale étant reçue au moins partiellement entre les au moins deux parties extérieures.

5. Voiture d'enfant pliable et de largeur modifiable selon la revendication 4, **caractérisée en ce que** la liaison transversale (4) de longueur modifiable présente au moins deux logements d'adaptateur (14) pour la fixation libérable d'un insert (13), les au moins deux logements d'adaptateur (14) étant disposés sur l'au moins une partie centrale et/ou respectivement sur au moins une partie extérieure de manière déplaçable le long de l'étendue longitudinale de la liaison transversale (4) de longueur modifiable et/ou de manière pivotante autour de l'étendue longitudinale de la liaison transversale (4) de longueur modifiable.

6. Voiture d'enfant pliable et de largeur modifiable selon la revendication 1, **caractérisée en ce qu'**au moins un élément ressort est disposé entre le groupe de base et le cadre de voiture d'enfant (2), lequel élément ressort relie l'un à l'autre le groupe de base et le cadre de voiture d'enfant (2) de manière mobile élastiquement.

7. Voiture d'enfant pliable et de largeur modifiable selon la revendication 6, **caractérisée en ce que** l'au moins un élément ressort est disposé, par une extrémité, de manière mobile en pivotement sur la liaison transversale (4) de longueur modifiable du cadre de voiture d'enfant (2) et, par une autre extrémité, de manière mobile en pivotement sur l'un des profilés creux (11) du châssis (3) et relie ceux-ci l'un à l'autre de manière mobile élastiquement.

8. Voiture d'enfant pliable et de largeur modifiable selon la revendication 6 ou 7, **caractérisée en ce que** l'au moins un élément ressort est un ressort à pression de gaz (8).

9. Voiture d'enfant pliable et de largeur modifiable selon la revendication 1, **caractérisée en ce que** la voiture d'enfant (1) est réalisée de manière à pouvoir être verrouillée dans deux positions, à savoir une première position d'utilisation dépliée et une deuxième position de non utilisation repliée, des moyens d'encliquetage servant au verrouillage de la voiture d'enfant (1) dans au moins l'une des deux positions étant prévus à cet effet sur le cadre de voiture d'enfant (2) et/ou sur le groupe de base.

10. Voiture d'enfant pliable et de largeur modifiable selon la revendication 6 ou 7, **caractérisée en ce que** l'au moins un élément ressort supporte le cadre de voiture d'enfant (2) de manière dépliée par le biais de sa force de ressort.
